Europäisches Patentamt

(19) European Patent Office

Office européen des brevets

(11) Numéro de publication: **0 188 962**
**B1**

(12) **FASCICULE DE BREVET EUROPEEN**

(45) Date de publication du fascicule du brevet:
**11.10.89**

(21) Numéro de dépôt: **85402605.1**

(22) Date de dépôt: **23.12.85**

(51) Int. Cl.⁴: **C03C 17/00, B05D 1/06,
B05D 1/12**

(54) **Perfectionnement au procédé de revêtement d'un substrat tel un ruban de verre, par un produit pulvérulent, et dispositif pour la mise en oeuvre de ce procédé.**

(30) Priorité: **07.01.85 FR 8500134**

(43) Date de publication de la demande:
**30.07.86 Bulletin 86/31**

(45) Mention de la délivrance du brevet:
**11.10.89 Bulletin 89/41**

(84) Etats contractants désignés:
**AT BE CH DE FR GB IT LI LU NL SE**

(56) Documents cités:
**DE-A- 2 058 350**
**US-A- 4 397 259**

(73) Titulaire: **SAINT-GOBAIN VITRAGE, "Les
Miroirs" 18, avenue d'Alsace, F-92400 Courbevoie(FR)**

(72) Inventeur: **Coulon, Jean-Claude, Ruelle de Brintet,
F-71640 Mercurey(FR)**
Inventeur: **Kramer, Carl, Am Chorusberg 8,
D-5100 Aachen(DE)**
Inventeur: **Schaefer, Wolfang, Kuhlweg 31,
D-5100 Aachen(DE)**
Inventeur: **Sustmann, Hans, Evezastrasse 8 E, Köln(DE)**

(74) Mandataire: **Leconte, Jean-Gérard et al, Saint-Gobain
Recherche 39, Quai Lucien Lefranc,
F-93304 Aubervilliers Cedex(FR)**

## Description

L'invention concerne le procédé de revêtement d'un substrat plat, notamment un ruban de verre, avec un produit pulvérulent, pour former une couche d'oxyde métallique sur ledit substrat, procédé selon lequel une buse de distribution se terminant en fente, projette sur ledit substrat, un courant gazeux, mélangé avec le produit pulvérulent, selon une incidence telle que ledit courant mélangé au produit pulvérulent, rencontre la surface du substrat, avant d'être aspiré par un dispositif d'aspiration à fente placé à distance de la buse et parallèlement à elle.

Cette technique est différente de celle décrite dans le document de brevet DE-A 2 058 350 et relative au revêtement de l'intérieur d'un tube cylindrique par une poudre distribuée dans la direction de l'axe longitudinal du tube par une buse enfoncée dans ledit tube. Dans ce cas pour que la poudre rencontre la paroi interne du tube, il faut la dévier dès sa sortie de la buse, sinon pratiquement aucun dépôt ne se fait.

La technique concernée par l'invention se rapporte au revêtement d'un substrat plat et elle est utilisée directement sur une ligne de fabrication de verre plat, pour revêtir le ruban de verre, peu après sa production, d'une couche d'oxyde métallique, résultant de la pyrolyse de composés métalliques et conférant au verre des qualités particulières, notamment de réflexion et/ou de transmission lumineuse et énergétique.

Des composés halogénés à l'état de poudre, tels que ceux décrits dans la publication de brevet DE 3 010 077, sont par exemple utilisés pour l'obtention d'une couche d'oxyde d'étain dopée au fluor, réfléchissant le rayonnement infrarouge.

Lorsqu'on projette sur le ruban de verre chaud, le courant gazeux dans lequel le produit pulvérulent est en suspension, une partie seulement de la poudre reste sur le verre où sous l'effet de la haute température elle se décompose pour former la couche d'oxyde métallique souhaitée. La plus grande partie de la poudre est entraînée par le courant gazeux et est aspirée avec lui, par le dispositif d'aspiration à fente placé à distance de la buse. C'est inévitablement ce qui se passe dans l'installation décrite dans le document de brevet US 4 397 259.

L'invention a pour but d'améliorer cette technique connue de revêtement afin d'augmenter la quantité de poudre qui se dépose sur le substrat, et en particulier du verre, et par là même, d'augmenter le rendement du procédé de revêtement pour pouvoir produire les couches de revêtement souhaitées avec des doses réduites de poudre.

Ce but est atteint selon l'invention par le fait que dans l'intervalle entre la buse de distribution et le dispositif d'aspiration, on crée et maintient au moins un tourbillon stable de gaz chargé de poudre grâce à une limitation en hauteur de cet intervalle par une paroi et par un ajustement des volumes gazeux introduits dans cet intervalle et/ou aspirés de cet intervalle.

Par cette circulation rotative prévue selon l'invention et grâce à laquelle le gaz au cœur du tourbillon tourne approximativement comme un corps solide, les particules de poudre ne sont pas transportées directement vers le dispositif d'aspiration par le plus court chemin, mais sont au contraire entraînées dans le mouvement de rotation de façon que leur temps de séjour moyen dans la zone de revêtement du substrat soit allongé et que les particules de poudre balaient plusieurs fois la surface dudit substrat, ce qui augmente fortement leur probabilité de dépôt.

Ceci conduit à une amélioration du rendement et par conséquent à une économie très significative en produit pulvérulent.

Suivant un perfectionnement de l'invention, la taille, c'est à dire le diamètre d'un tourbillon, et sa vitesse de rotation sont ajustés par des modifications appropriées du volume gazeux projeté par la buse et/ou du volume gazeux aspiré, de sorte qu'il est possible de faire varier le temps de séjour de la poudre dans la zone de revêtement et de l'obtenir aussi long que désiré.

Suivant une variante de l'invention, on prévoit de créer et de maintenir deux tourbillons tournant en sens inverse l'un de l'autre, formés par des courants gazeux dirigés parallèlement à la surface du substrat à revêtir, allant à la rencontre de la suspension gazeuse de poudre projetée par la buse de distribution sur la surface du substrat.

Ceci améliore encore le rendement du revêtement.

L'invention sera maintenant décrite plus en détail, en référence aux figures jointes qui représentent:

Figure 1: une installation pour le revêtement d'un ruban de verre "float" avec un produit pulvérulent suivant un mode de réalisation simple du procédé selon l'invention,

Figure 2: une installation pour le revêtement d'un ruban de verre "float" avec un produit pulvérulent dans laquelle des tourbillons sont formés des deux côtés de la buse de distribution,

Figure 3: une installation identique à celle de la figure 2, mais dans laquelle, à la suite de modifications des conditions de fonctionnement deux tourbillons sont formés de chaque côté de la buse de distribution.

L'invention s'applique au dépôt de poudre sur n'importe quel substrat, mais nous prendrons en exemple uniquement le dépôt sur la surface d'un ruban de verre "float", immédiatement après sa fabrication, sans que cela toutefois constitue une limitation de l'invention. Ainsi en particulier, dans le domaine verrier, l'invention pourrait tout aussi bien s'appliquer au revêtement de verre coulé, formé par un dispositif de laminage, puis refroidi de façon contrôlée dans une étenderie ou tunnel de refroidissement.

Dans le procédé "float" de fabrication de verre plat, représenté sur les dessins, un ruban de verre 1 est produit sur un bain métallique 2 d'étain en fusion placé dans une enceinte 3 fermée, sous atmosphère réductrice. A l'extrémité de cette enceinte 3, le ruban de verre 1 est soulevé au-dessus du bain métallique 2 et est transporté en continu sur des rouleaux 4 en suivant la direction de la flèche F, au travers d'une étendrie 5 dans laquelle il se refroidit lentement jusqu'à température ambiante. En sortie de bain métallique 2, le ruban de verre a une température d'environ 600°C.

Entre l'enceinte 3 contenant le bain métallique 2 et l'étenderie 5, on prévoit une zone dans laquelle est réalisé le revêtement du ruban de verre 1 avec un produit pulvérulent qui par transformation pyrolitique forme la couche d'oxyde métallique 8 souhaitée. Des dispositifs de chauffage, ici non représentés et situés au-dessus et/ou au-dessous du ruban de verre 1, sont prévus pour le réglage de la température dans la zone Z.

Pour une répartition uniforme du produit pulvérulent, qui se compose par exemple d'une poudre très finement divisée de difluorure de dibutyl étain, poudre employée pour la fabrication d'une couche d'oxyde d'étain dopée au fluor, on utilise une buse de distribution 10 se terminant en fente et s'étendant sur toute la largeur du ruban de verre 1. De telles buses sont décrites dans les demandes de brevet français publiées sous les no 2 542 636 et 2 542 637.

A l'aide de la buse de distribution 10, le matériau de revêtement pulvérulent est projeté sur le ruban de verre 1 sous la forme d'une suspension 12 de poudre dans un courant gazeux. L'ouverture de la buse de distribution 10 est disposée à peu de distance au-dessus du ruban de verre. Le courant gazeux contenant la poudre est dirigé sur le ruban de verre qu'il balaye sur une longueur S avant de pénétrer à travers un dispositif d'aspiration 14 dans un caisson fermé 15, d'où il est aspiré par une conduite 16. Le dispositif d'aspiration 14, lui-même formé d'une buse se terminant en fente, s'étent sur toute la largeur du ruban de verre 1 comme la buse de distribution 10, et parallèlement à celle-ci.

Une des parois 15' du caisson 15 se prolonge jusqu'à la buse 10 pour former un plafond qui limite en hauteur la zone Z de revêtement. Immédiatement derrière le dispositif d'aspiration 14 est disposée une paroi 18 qui affleure presque le ruban de verre 1 pour éviter que le courant gazeux chargé de poudre ne sorte de la zone de revêtement Z.

De chaque côté de la zone de revêtement Z, dans la direction longitudinale de défilement du ruban de verre 1 sont également prévues des parois de fermeture, non visibles sur la représentation de profil de la figure, par exemple constituées par des rideaux affleurant la surface du ruban de verre 1.

Les positions et dimensions de la buse de distribution 10, du caisson 15, de la paroi 18, d'une part, les débits et pressions du courant gazeux 12 qui contient la poudre en suspension et qui est projeté par la buse 10, du courant de gaz aspiré par le dispositif d'aspiration à fente 14 d'autre part, sont tels qu'il se forme entre la buse de distribution 10 et le dispositif d'aspiration 14 un tourbillon gazeux stable 20. Une modification des paramètres énumérés ci-dessus entraîne une modification de la taille et de la vitesse de rotation du tourbillon 20.

Ce tourbillon 20 évite que le mélange de gaz et de poudre émis par la buse de distribution 10 ne soit directement et immédiatement aspiré par le dispositif d'aspiration à fente 14, après seulement un balayage de la surface du ruban de verre 1.

Au contraire il entraîne ce mélange de gaz et de poudre en rotation et lui fait balayer plusieurs fois la surface du ruban de verre 1 avant qu'il ne soit aspiré. Il en résulte une augmentation du temps de contact de la poudre avec le verre et donc de la possibilité pour la poudre de se déposer sur le verre. Il en résulte également une minimisation de la captation de matière pulvérulente encore active par le dispositif d'aspiration à fente 14.

Le rendement de l'opération de revêtement est ainsi amélioré et également l'ensemble des moyens d'aspiration est moins souillé par des dépôts de poudre.

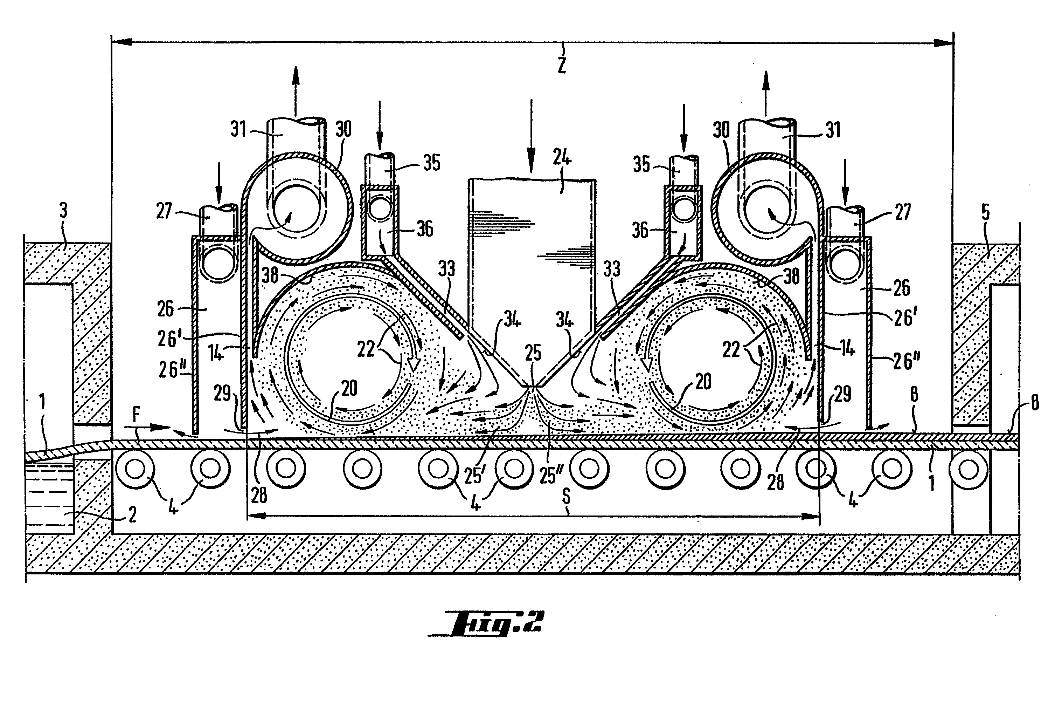

Dans le mode de réalisation du dispositif pour mettre en œuvre le procédé selon l'invention, illustré à la figure 2, on retrouve la zone de revêtement Z disposée entre l'enceinte 3 du bain float et l'étenderie 5. Une buse de distribution, ici référencée 24 est dirigée vers le ruban de verre 1. De préférence elle est orientée approximativement verticalement, de sorte que le courant de gaz et de poudre 25 qu'elle projette se partage en deux parties 25' et 25", sensiblement égales qui se dirigent respectivement, en sens contraire de la flèche F qui indique le sens de défilement du ruban de verre 1 et dans le sens de la flèche F.

En amont et en aval de la buse de distribution 10, la zone de revêtement Z est fermée par deux cloisons par exemple verticales 26' 26" qui déterminent une rampe 26 de soufflage de gaz. Un gaz chaud est introduit sous pression dans ces rampes 26 grâce à des tubes 27. Ce gaz s'évacue ensuite, partiellement sous la forme d'un courant 28 dirigé vers l'intérieur de la zone de revêtement Z, en passant par une fente 29 ménagée entre le ruban de verre 1 et la cloison 26' séparant la rampe 26 de la zone de revêtement Z.

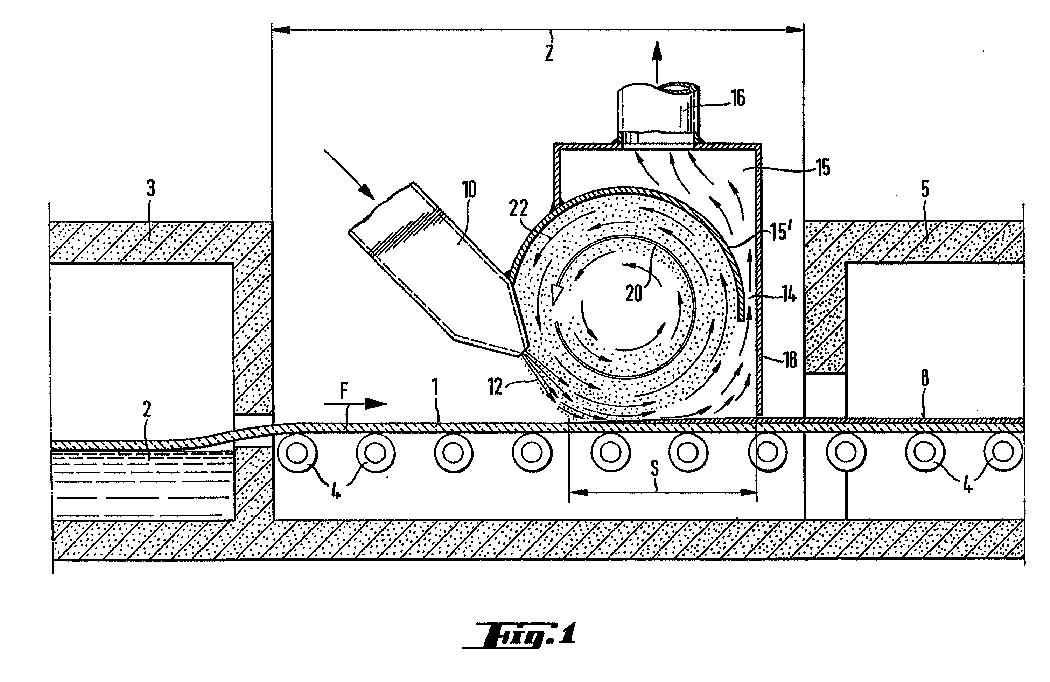

Comme dans le mode de réalisation illustré par la figure 1, des parois, non visibles sur la vue de profil que constitue la figure 2, et par exemple constituées par des rideaux qui affleurent la surface du verre, ferment la zone de revêtement sur ses deux côtés longitudinaux.

Reliés aux rampes 26 et disposés parallèlement à elles, les dispositifs d'aspiration à fente 14, du même type que ceux déjà présentés sur l'installation de la figure 1, conduisent chacun à un caisson 30 formé d'un tube cylindrique, à partir duquel les gaz sont aspirés par une conduite 31.

D'autres buses transversales de soufflage 33 sont disposées le long des parois inférieures 34 du corps de la buse de distribution 24. Par ces buses de soufflage 33, un courant gazeux auxiliaire, de préférence chaud, à température réglable, est dirigé le long des parois 34 de la buse 24.

Ce courant gazeux est fourni par les tuyaux 35 et les chambres de répartition 36, et il assure le chauffage du nez de la buse 24 en même temps que le chauffage ou le maintien de la température élevée dans la zone de revêtement Z.

La zone de revêtement est limitée en hauteur par deux parois 38 allant chacune de la bouche d'un des dispositifs d'aspiration à fente 14 à celle de la buse de soufflage 33. Ces parois 38 présentent une forme voûtée cylindrique afin d'éviter la formation de zones mortes pour la circulation des gaz.

Selon cette disposition, de chaque côté de la buse de distribution, un tourbillon 20 stable se forme à partir du mélange de gaz et de poudre, ces deux tourbillons 20 ayant des sens de rotation opposés. Les courants fluides qui leur sont extérieurs les approvisionnent, notamment en poudre, de sorte que la poudre subit une circulation rotative et approche plusieurs fois la surface du ruban de verre. Il en résulte que la probabilité de dépôt de poudre sur cette surface de verre est sensiblement augmentée.

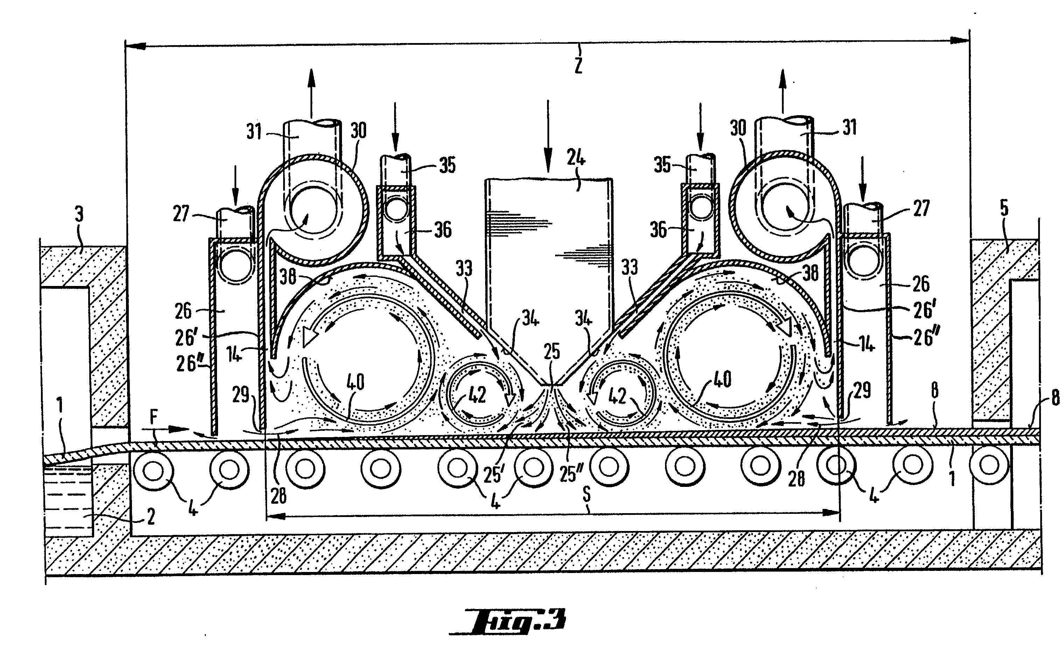

L'installation selon la figure 3, pour la mise en œuvre du procédé selon l'invention comporte les mêmes dispositifs que celle représentée sur la figure 2. Mais par une augmentation du volume de gaz introduit dans les rampes 26 par les tubes 27, par une augmentation simultanée du volume gazeux aspiré, et le cas échéant par une modification du courant gazeux chargé en poudre projeté par la buse de distribution 24, on obtient dans la zone de revêtement Z, de chaque côté de la buse 24, non plus un seul, mais deux tourbillons 40, 42 ayant des sens de rotation opposés.

Le volume gazeux aspiré par les caissons 30 et les conduites 31 joue aussi un rôle dans la formation de ces doubles tourbillons. Tous les volumes gazeux sont déterminés et réglés de telle sorte que les courants gazeux forment des tourbillons 40 et 42 stables. Ainsi l'effet souhaité est atteint, c'est à dire l'allongement du temps de séjour de mélange de gaz et de poudre dans la zone de revêtement.

En général le nombre, la position et la taille des tourbillons sont fonction des paramètres géométriques de l'installation et des volumes gazeux aspirés et/ou soufflés.

Dans les installations décrites en relation avec les figures 2 et 3, les phénomènes de tourbillons étaient symétriques par rapport à la buse de distribution 24.

Cependant il est possible, en rendant dissymétrique l'installation, soit dans ses caractéristiques géométriques, soit dans ses conditions de fonctionnement, d'obtenir des tourbillons dissymétriques.

On peut ainsi soit rendre les probabilités de dépôt de poudre en amont et en aval de la buse, soit sensiblement identiques, soit différentes.

**Revendications**

1. Procédé de revêtement d'un substrat plat, tel un ruban de verre, par un produit pulvérulent pour former une couche d'oxyde métallique sur ledit substrat, procédé dans lequel un courant gazeux chargé en produit pulvérulent est dirigé sur le substrat au moyen d'une buse de distribution terminée par une fente, selon une incidence telle qu'il rencontre la surface du substrat avant d'être aspiré par un dispositif d'aspiration à fente placé à distance de la buse et parallèlement à elle, caractérisé en ce qu'on crée et maintient au moins un tourbillon stable de gaz chargé en poudre dans l'intervalle entre la buse de distribution et le dispositif d'aspiration grâce à une limitation en hauteur de cet intervalle par paroi (15', 38) et par un ajustement des volumes gazeux introduits dans cet intervalle et/ou aspirés de cet intervalle.

2. Procédé suivant la revendication 1, caractérisé en ce que la taille et la vitesse de rotation du tourbillon sont ajustées par réglage du volume gazeux projeté par la buse et/ou du volume gazeux aspiré.

3. Procédé suivant une des revendications 1 ou 2, caractérisé en ce que, par une augmentation du volume gazeux aspiré, deux tourbillons (40, 42) ayant des sens de rotation inverses sont créés et maintenus.

4. Procédé suivant une des revendications 1 à 3, caractérisé en ce que le ou les tourbillons (20, 40, 42) sont créés et maintenus de chaque côté de la buse.

5. Procédé suivant une des revendications 1 à 4, caractérisé en ce que le long du corps de buse, un courant auxiliaire de gaz chaud est soufflé dans la zone de revêtement.

6. Dispositif pour la mise en œuvre du procédé selon l'une quelconque des revendications 1 à 5, comprenant une buse de distribution d'une poudre en suspension dans un courant gazeux (10, 24) dirigée vers la surface du substrat, notamment un ruban de verre 1, au moins sur un côté de la buse de distribution (10, 24) une paroi (18, 26') limitant une zone de revêtement (Z) et parallèlement à cette paroi (18, 26'), à l'intérieur de la zone de revêtement (Z) un dispositif d'aspiration (14), caractérisé en ce que la zone de revêtement est limitée en hauteur par une paroi (15', 38) placée entre la buse (10, 24) et le dispositif d'aspiration (14) et en ce que des moyens de réglage des volumes gazeux introduites dans la zone de revêtement et/ou aspirés de cette zone, sont prévus.

7. Dispositif suivant la revendication 6, caractérisé en ce que la paroi (10, 38) délimitant en hauteur la zone de revêtement présente une surface voûtée.

8. Dispositif suivant l'une des revendications 6 à 7, caractérisé en ce que la paroi supérieure (15', 38) atteint l'ouverture du dispositif d'aspiration (14).

9. Dispositif suivant l'une des revendications 6 à 8, caractérisé en ce qu'à côté de la buse (24), il est prévu une buse de soufflage (33) qui envoie un courant gazeux chaud auxiliaire le long de la buse (24).

10. Dispositif suivant la revendication 9, caractérisé en ce que la paroi supérieure (38) atteint l'ouverture de la buse de soufflage (33).

11. Dispositif suivant une des revendications 6 à 10, caractérisé en ce que les parois (26') limitant sur les côtés la zone de revêtement (Z) sont doubles, délimitant ainsi des rampes (26) ouvertes, par lesquelles un gaz chaud est injecté dans la zone de revêtement (Z).

**Patentansprüche**

1. Verfahren zum Beschichten eines flachen Substrats, wie eines Glasbandes, mit einem pulverförmigen Material zur Bildung einer Metalloxidschicht auf dem Substrat, bei dem ein das pulverförmige Material enthaltender Gasstrom mit Hilfe einer Schlitzdüse unter einem solchen Einfallswinkel auf das Substrat gerichtet wird, daß er auf die Oberfläche des Substrats auftritt und durch eine im Abstand und parallel zur Schlitzdüse angeordnete schlitzförmige Absaugvorrichtung abgesaugt wird, dadurch gekennzeichnet, daß durch Begrenzung der Höhe des Zwischenraumes zwischen der Verteilerdüse und der Absaugvorrichtung durch eine Wand (15', 38) und durch Regelung der in diesen Zwischenraum eingeführten und/oder aus diesem Zwischenraum abgesaugten Gasvolumen wenigstens ein stabiler Wirbel von mit dem Pulver beladenem Gas in diesem Zwischenraum erzeugt und aufrechterhalten wird.

2. Verfahren nach Anspruch 1, dadurch gekennzeichnet, daß die Größe und die Rotationsgeschwindigkeit des Wirbels durch Regelung des aus der Auftragsdüse austretenden Gasvolumens und/oder des abgesaugten Gasvolumens eingestellt wird.

3. Verfahren nach Anspruch 1 oder 2, dadurch gekennzeichnet, daß durch Erhöhung des abgesaugten Gasvolumens zwei gegenläufig rotierende Wirbel (40, 42) gebildet und aufrechterhalten werden.

4. Verfahren nach einem der Ansprüche 1 bis 3, dadurch gekennzeichnet, daß der bzw. die Wirbel (20, 40, 42) auf beiden Seiten der Beschichtungsdüse erzeugt und aufrechterhalten werden.

5. Verfahren nach einem der Ansprüche 1 bis 4, dadurch gekennzeichnet, daß entlang dem Düsenkörper ein heißer Hilfs-Gasstrom in den Beschichtungsraum eingeblasen wird.

6. Vorrichtung zur Durchführung des Verfahrens nach einem der Ansprüche 1 bis 5, mit einer Verteilerdüse (10, 24) für ein in einem Gasstrom in Suspension befindlichen Pulver, die auf die Oberfläche des Substrats, insbesondere eines Glasbandes (1), gerichtet ist, und mit einer wenigstens auf einer Seite der Verteilerdüse (10, 24) angeordneten eine Beschichtungszone (Z) begrenzenden Wand (18, 26') und einer innerhalb der Beschichtungszone (Z) parallel zu der Wand (18, 26') angeordneten Absaugvorrichtung (14), dadurch gekennzeichnet, daß die Beschichtungszone (Z) in der Höhe durch eine zwischen der Düse (10, 24) und der Absaugvorrichtung (14) angeordnete Wand begrenzt ist, und daß Mittel zur Regelung der in die Beschichtungszone (Z) eingeführten und/oder der aus dieser Zone abgesaugten Gasvolumen vorgesehen sind.

7. Vorrichtung nach Anspruch 6, dadurch gekennzeichnet, daß die den Beschichtungsraum nach oben begrenzende Wand (10, 38) eine gewölbte Oberfläche aufweist.

8. Vorrichtung nach Anspruch 6 oder 7, dadurch gekennzeichnet, daß die obere Wand (15', 38) bis zur Mündung der Absaugvorrichtung (14) reicht.

9. Vorrichtung nach einem der Ansprüche 6 bis 8, dadurch gekennzeichnet, daß neben der Düse (24) eine einen heißen Hilfs-Gasstrom entlang der Düse (24) richtende Blasdüse (33) vorgesehen ist.

10. Vorrichtung nach Anspruch 9, dadurch gekennzeichnet, daß die obere Wand (38) bis zur Mündung der Blasdüse (33) reicht.

11. Vorrichtung nach einem der Ansprüche 6 bis 10, dadurch gekennzeichnet, daß die die Beschichtungszone (Z) seitlich abschließenden Wände (26') Doppelwände sind, die offene Rampen (26) begrenzen, durch die heißes Gas in die Beschichtungszone (Z) eingeleitet wird.

## Claims

1. A method of coating a flat substrate, such as a band of glass, with a pulverulent product to form a layer of metallic oxide on said substrate, in which method a gaseous current charged with pulverulent product is directed onto the substrate by means of a distribution nozzle terminating in a slit, at an incidence such that it meets the surface of the substrate before being sucked away by a slit suction device situated at a distance from the nozzle and parallel to it, characterized in that at least one stable vortex of gas charged with powder is created and maintained in the space between the distribution nozzle and the suction device by means of a limitation of the height of this space by a wall (15', 38) and by an adjustment of the gaseous volumes introduced into this space and/or sucked out from this space.

2. A method according to Claim 1, characterized in that the size and speed of rotation of the vortex of are adjusted by regulating the gaseous volume projected by the nozzle and/or the gaseous volume sucked away.

3. A method according to one of Claims 1 or 2, characterized in that, by an increase in the gaseous volume sucked away, two vortices (40, 42) having opposite directions of rotation are created and maintained.

4. A method to one of Claims 1 to 3, characterized in that the vortex or the vortices (20, 40, 42) are created and maintained on each side of the nozzle.

5. A method according to one of Claims 1 to 4, characterized in that along the length of the nozzle body an auxiliary current of hot gas is blown into the coating zone.

6. Device for carrying out the method according to any one of Claims 1 to 5, comprising a distribution nozzle for a powder in suspension in a gaseous current (10, 24), directed towards the surface of the substrate, notably a band of glass (1), at least on one side of the distribution nozzle (10, 24) a wall (18, 26') limiting a coating zone (Z) and, parallel to this wall (18, 26'), inside the coating zone (Z) a suction device (14), characterized in that the coating zone is limited in height by a wall (15', 38) situated between the nozzle (10, 24) and the suction device (14) and in that means are provided for regulating the gaseous volumes introduced into the coating zone and/or sucket out of this zone.

7. Device according to Claim 6, characterized in that the wall (10, 38) limiting the coating zone in height has an arched surface.

8. Device according to one of Claims 6 to 7, characterized in that the upper wall (15', 38) reaches the aperture of the suction device (14).

9. Device according to one of Claims 6 to 8, characterized in that, alongside the nozzle (33), which discharges an auxiliary, hot gaseous current along the nozzle (24).

10. Device according to Claim 9, characterized in that the upper wall (38) reaches the aperture of the blowing nozzle (33).

11. Device according to one of Claims 6 to 10, characterized in that the walls (26') limiting the coating zone (Z) at the sides are double, thus defining open ducts (26), through which a hot gas is injected into the coating zone (Z).

Fig.1

Fig.2

Fig.3